Europäisches Patentamt

(19) European Patent Office

Office européen des brevets

(11) Numéro de publication: **0 234 977**

**A1**

(12) **DEMANDE DE BREVET EUROPEEN**

(21) Numéro de dépôt: **87400102.7**

(22) Date de dépôt: **16.01.87**

(51) Int. Cl.³: **A 01 J 25/12**

(30) Priorité: **21.01.86 FR 8600784**

(43) Date de publication de la demande:
**02.09.87 Bulletin 87/36**

(84) Etats contractants désignés:
**AT DE ES IT NL**

(71) Demandeur: **Larrainzar Goni, Francisco**
**Ferrocarril, 2-1 dcha.**
**E-31012 Pamplona(ES)**

(72) Inventeur: **Larrainzar Goni, Francisco**
**Ferrocarril, 2-1 dcha.**
**E-31012 Pamplona(ES)**

(74) Mandataire: **Bruder, Michel**
**10 rue de la Pépinière**
**F-75008 Paris(FR)**

(54) **Appareil de pulsation pour la traite des animaux laitiers.**

(57) La présente invention concerne un appareil de pulsation pour la traite des animaux laitiers destiné à assurer, lors de la traite, une succion alternative des pis de l'animal.

Cet appareil est caractérisé en ce que les deux demi-chambres extérieures (14) des moyens d'actionnement du tiroir principal (5) sont reliées par un organe tubulaire (9) transparent monté en place, qui renferme à l'intérieur un organe mobile tel qu'un piston (10), de sorte que le déplacement du tiroir et le déplacement de l'air qui s'ensuit de l'une vers l'autre des deux demi-chambres (14) du même tiroir est rendu clairement visible par le déplacement de ce piston (10), qui porte également un orifice calibré qui permet de régler le flux d'air déplacé.

Fig 4

L'invention faisant l'objet de la présente demande est un appareil de pulsation pour la traite des animaux laitiers destiné à assurer, lors de la traite, une succion alternative des pis de l'animal, comprenant un ensemble de deux vannes à trois voies du type à tiroir mu par des moyens d'actionnement situés aux parties extrêmes de leur axe de mouvement, constitués pour chaque tiroir par une chambre située à chacune des parties extrêmes d'une tige axiale qui les réunit , chacune de ces chambres étant divisée, dans le sens de l'axe de cette tige, par une membrane élastique transversale, en deux demi-chambres dont l'une est située vers l'extérieur et l'autre vers l'intérieur de l'appareil.

Autant dans le cas de la traite automatique des animaux laitiers, que dans celui de la traite manuelle, il est nécessaire d'effectuer une succion alternative des pis de l'animal afin de réaliser une extraction parfaitement complète du lait et de ce fait augmenter au maximum la production respective. Les installations de traite automatique comportent dans ce but, toujours un organe qui réalise de manière automatique des cycles de succion d'une certaine durée déterminée, selon les caractéristiques de l'animal soumis à la traite cycles, pendant lesquels le pis de l'animal est mis en communication avec la succion continue fournie par la pompe de traite.

Ces organes d'action cyclique sont, du fait de cette manière de travail alternatif, connus sous le nom d'appareil de pulsation ou "pulsateurs" la conformation de ces appareils s'est améliorée de manière permanente depuis les dispositifs primitifs, constitués de mécanismes complexes, d'un fonctionnement peu fiable et de faible durée, jusqu'à ceux actuellement utilisés, qui sont actionnés généralement par la même source de vide de succion. Ces dispositifs apportent en général une importante simplification du dispositif et de l'installation dans sa totalité.

Ces appareils de pulsation sont généralement constitués par une vanne à tiroir à trois voies qui, selon sa position, connecte à la source de succion, l'une ou l'autre des tubulures qui se dirigent vers les divers pis de l'animal soumis à la traite.

Cette vanne à tiroir est du type de celles qui sont commandées par une tige solidaire de membranes extrêmes et par lesquelles une seconde vanne à tiroir ou vanne de pilotage permet sa communication soit avec la source de succion, soit avec l'atmosphère. La première vanne à tiroir commande à son tour la vanne de pilotage de sorte que ces deux vannes changent constamment de position, en provoquant l'effet désiré, plus spécialement constitué par la succion par pulsation. Un appareil de ce genre est par exemple celui qui est décrit dans le brevet français 2 201 828.

Dans les premières vannes actionnant par succion et automatiquement de la même manière que dans le cas du brevet francais 2 201 828 mentionné plus haut, l'air contenu dans les organes d'actionnement pneumatiques du côté opposé à celui par où arrive le vide pour actionner l'appareil, sort et entre à partir de l'atmosphère par des orifices ouverts, plus spécialement calibrés de manière à établir un réglage des cycles de travail, sans nécessiter aucun organe interposé en dehors de certains filtres rudimentaires. De la sorte, toute obstruction de quelque nature que ce soit, de ces orifices donne lieu à une contrepression totalement indésirable, qui affecte de manière très importante le fonctionnement de l'appareil de pulsation.

On a constaté, lors du fonctionnement de ces organes, que ces entrées et sortie d'air continues, malgré l'existence des filtres mentionnés, donnent lieu à des dépôts de toute sorte de particules telle que des poussières, d'humidité et autres. Ces particules qui s'y déposent, affectent défavorablement, de manière substantielle le fonctionnement de l'appareil. Ces conditions imposent à l'utilisateur une surveillance continue en ce qui concerne la propreté de ces orifices.

On connaît déjà une solution pour éviter les méfaits de ce problème, telle que celle que fait connaître le brevet européen 79 200 504 3 appartenant à "INTERPULS". Selon cette solution, les entrées et sorties d'air n'existent plus il est établi, entre les chambres opposées et à travers le corps même de l'appareil de pulsation une communication qui permet la traversée de part en part de l'appareil, par l'air des organes d'actionnement, on évite ainsi la création de surpressions et également l'entrée de l'air extérieur qui apporte généralement des particules indésirables, ainsi qu'un grand contenu d'humidité.

Une telle communication entre chambres, plus spécialement en un circuit fermé qui ne communique pas avec l'air extérieur, est déjà connue antérieurement par rapport au brevet européen cité plus haut, on peut citer en exemple le brevet autrichien 267 948 appartenant à "ALFA-LAVAL" dans lequel il est déjà décrit une communication au travers, non pas du corps même d'un tel appareil, mais d'un conduit tubulaire faisant communiquer les chambres mentionnées. Ce conduit tubulaire est en outre justement la tige d'association desdites membranes.

Malgré les perfectionnements obtenus de la sorte, cet appareil de pulsation qui est le coeur de toute l'installation de traite, est l'un de ses points les plus sensibles non seulement du fait que ses défections de fonctionnement peuvent altérer le rythme de la traite, mais également du fait que toute défection de l'installation ou bien de l'animal trait se répercute dans cet organe, en causant son fonctionnement irrégulier.

Jusqu'à ce jour, l'utilisateur de l'installation devait, afin de surveiller et se convaincre du bon fonctionnement de son installation, écouter l'appareil de pulsation et vérifier par voie acoustique que la cadence effective du mouvement des vannes est correcte pour son installation et selon l'animal auquel elle est appliquée.

Les vérifications acoustiques ainsi que mentionné sont de toute évidence possibles seulement lorsque l'appareil de pulsation utilisé est unique ou lorsqu'il est utilisé à un endroit où il se trouve isolé du reste de l'équipement de l'exploitation. Elles sont par contre impossibles lorsque l'appareil de pulsation fait partie intégrante d'une installation complexe de traite, comportant une série d' appareil de pulsation, qui sont multanément en mouvement, mais avec des rythmes tant soit peu différents de sorte qu'ils émettent dans leur ensemble un bruit continu dans lequel il est impossible de distinguer le mauvais fonctionnement de l'un ou de l'autre des appareil de pulsation en service.

Il est connu d'autre part que chaque type d'animal, que ce soit une vache, une brebis ou une chèvre, demande un rythme de traite différent, tandis que les appareils de pulsation sont généralement des appareils normalisés. Il est donc strictement nécessaire de disposer d'appareils présentant une possibilité précise de réglage du rythme de pulsation donc, plus spécialement pourvus d'organes qui peuvent régler la période de l'écoulement du fluide moteur, ainsi que, dans le cas de l'appareil de cette invention, les vannes à tiroir.

Ce mode de réglage qui se rencontre dans les appareils de pulsation connus à ce jour, soulève deux problèmes fondamentaux. Le premier de ces deux problèmes vient du fait que l'éleveur trouve très difficilement le point exact de réglage et de ce fait il travaille très souvent en dehors du rythme adéquat pour l'animal qu'il trait. Le second problème en question vient du fait que tout organe de réglage manipulable par filetage tel que vis ou similaire tend à se dérégler au cours du fonctionnement de l' appareil de pulsation. L'appareil nécessite donc des prévisions de mise au point qui doivent être faites par une personne spécialisée utilisant des instruments appropriés.

L'appareil de pulsation proposé par cette invention, destiné à la traite des animaux laitiers, élimine tous les inconvénients cités. Il constitue de ce fait un dispositif de haute sensibilité et d'un entretien pratiquement nul.

En effet, on propose par cette demande un appareil de pulsation pour la traite des animaux laitiers caractérisé en ce que dans cet appareil les deux demi-chambres extérieures des moyens d'actionnement du tiroir principal sont reliées par un organe tubulaire transparent monté en place, qui renferme à l'intérieur un organe mobile tel qu'un piston , de sorte que le déplacement du tiroir et le déplacement de l'air qui s'ensuit de l'une vers l'autre des deux demi-chambres du même tiroir est rendu clairement visible par le déplacement de ce piston, qui porte également un orifice calibré qui permet de régler le flux d'air déplacé.

Le dispositif de cette invention part du concept proposé dans le brevet autrichien 267 949 dans le sens que la communication entre les chambres se fait à travers un tube. Mais selon la présente invention, ce tube est transparent et il contient enfermé à l'intérieur, un organe mobile de la forme d'un piston ou similaire, ce moyen de liaison est transparent et visible de l'extérieur de l'appareil à travers une fenêtre portées par sa culasse ou également par tout autre moyen similaire.

En faisant appel à un organe visible de l'extérieur qui se déplace en suivant les mouvements des organes internes de l' appareil de pulsation, cet organe indique le régime de fonctionnement de l'appareil, quels que soient les bruits et les autres causes perturbatrices se trouvant dans le milieu dans lequel cet appareil est obligé de travailler. La vérification du fait que le fonctionnement de la station de traite est correct, est facilement et rapidement réalisée par l'utilisateur de l'appareil. Il est à même de détecter le moindre signal de mauvais fonctionnement de l'appareil, sans se servir d'aucun moyen d'écoute ou d'un dispositif spécial.

Cet organe qui se déplace au rythme de la pulsation peut, d'autre part, incorporer un organe d'étranglement calibré de sorte qu'à l'aide par exemple d'un simple perçage axial ou d'une rugosité périphérique plus ou moins profonde ou tout autre solution similaire, on peut régler le passage du flux d'air de l'une des chambres vers l'autre. On obtient de la sorte un réglage fixe de la cadence de pulsation sans recourir à aucun organe mobile, qui risquerait de changer, au cours de l'utilisation, de position initiale, du fait des vibrations qui se produisent.

De plus, du fait que pour chaque type d'animal à traire tel que vache, brebis ou chèvre, il y a un rythme spécifique de traite qui s'impose, l'organe indicateur du rythme, déplaçable peut avoir une couleur déterminée correspondant à chaque calibrage de la vitesse. Il indique dans ce cas, par l'intermédiaire de cette coloration ou bien par tout effet optique similaire, si la pulsation effective de l'appareil est ou non appropriée à l'animal qui est soumis à la traite .

Les avantages qui résultent de cette constitution nouvelle et inventive de l' appareil de pulsation suivant l'invention sont, sans nul doute, évidents. On peut distinguer parmi eux les suivants:

-On obtient une indication optique du fonctionnement qui est aisément aperçue.

-L'appareil peut venir de fabrique, réglé pour chaque type d'animal à traire , avec une précision totale et sans possibilité de déréglage par l'utilisation.

-Il n'y a aucune nécessité d'opération de réglage, postérieure à la mise en service.

-L'appareil ne demande qu'une manipulation minimale.

On décrira ci-après, à titre d'exemple non limitatif, une forme d'exécution de la présente invention, en référence au dessin annexé sur lequel:

La figure 1 est une vue en perspective éclatée de l' appareil de pulsation suivant l'invention proposée, avec ses couvercles supérieur et latéraux enlevés pour permettre la vue de ses organes composants intérieurs.

La figure 2 est une vue en perspective également éclatée, mais uniquement avec un seul couvercle latéral enlevé et avec ses membranes à l'état de montage.

La figure 3 est une vue de dessous de l'appareil de pulsation, montrant ses diverses possiblités distinctes de raccordement aux prises de vide et la figure 4 est une vue schématique de l'appareil pour faire comprendre son fonctionnement.

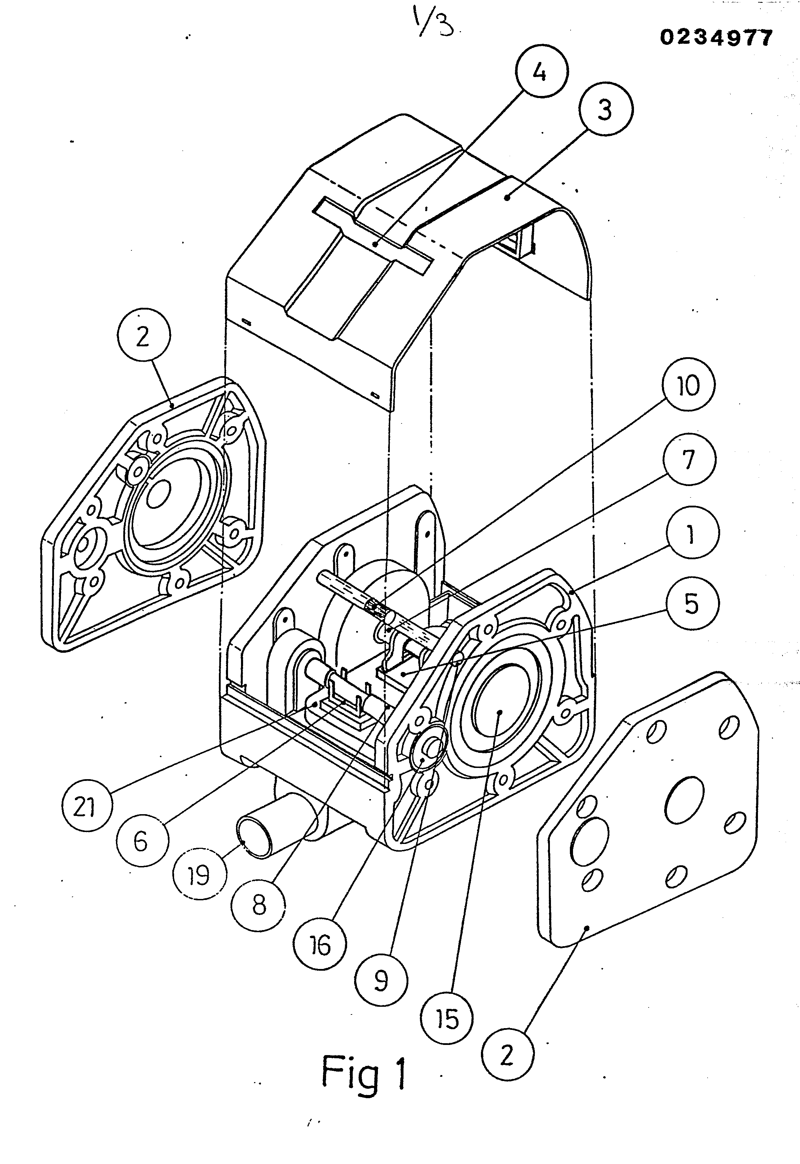

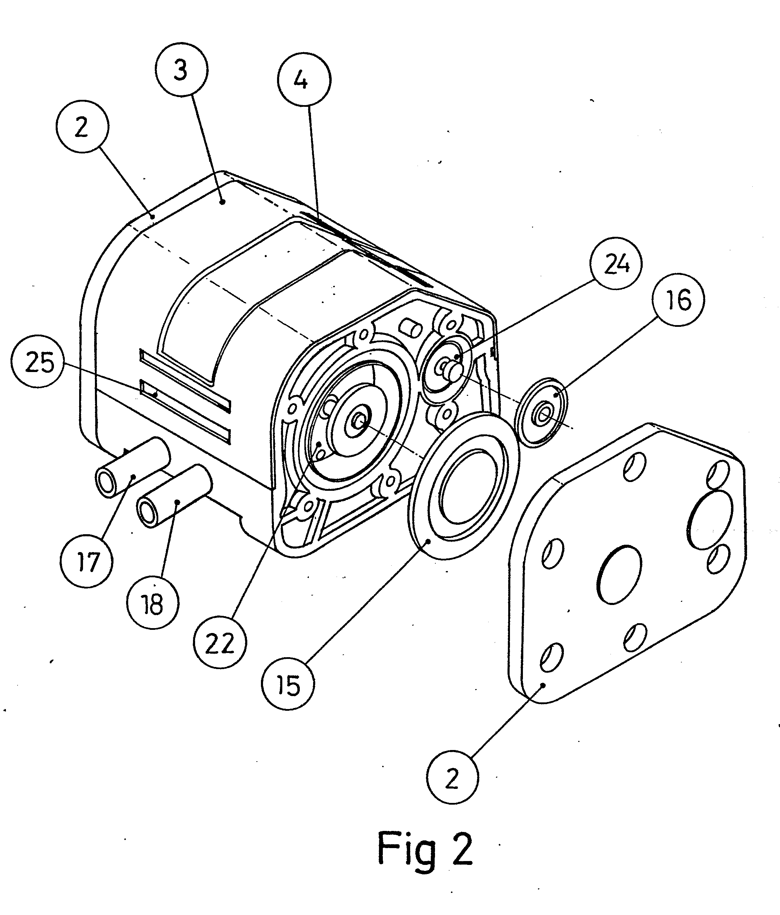

L'appareil qui fait l'objet de la présente invention telle qu'elle est proposée par la demande, est un appareil de pulsation perfectionné, pour traire des animaux qui fournissent du lait. Le but de cet appareil est d'établir, à l'endroit de deux prises 17 et 18 de succion, un effet de succion alternative sur chacun des deux pis auxquels elles s'appliquent, afin d'obtenir un rendement maximal de la traite, c'est-à-dire dans l'extraction du lait. L'appareil proposé est actionné à l'aide d'un vide, plus exactement à l'aide du vide utilisé par l'installation de traite. L'alternance de la succion est obtenue par le branchement à l'installation de vide de deux vannes à trois voies, de préférence du type à tiroir, qui sont associées à des tiges qui les actionnent dans un sens ou dans le sens opposé, du fait de la succion créée dans des chambres extrêmes et dans lesquelles sont logées des membranes élastiques transversales, associées à ces tiges, cela selon des formes d'exécution déjà connues. Chacune de ces chambres est ainsi divisée par l'une de ces membranes en deux demi-chambres dont l'une est située vers l'extérieur de l'appareil, représenté sur les figures 1 et 2 comprend un corps 1 fermé des deux côtés latéraux par deux couvercles latéraux 2 réunis par une culasse supérieure 3. Les deux prises 17 et 18 sont placées sur l'un des côtés du corps 1 et elles sont dirigées vers les deux pis concernés par la traite. le corps 1 comporte d'autre part une prise de vide 19 placée soit du côté opposé celui qui porte les deux prises 17 et 18 soit du côté du fond de l'appareil, selon la meilleure convenance locale, et constituant une entrée inférieure 20. Lors de l'utilisation de l'appareil, il est branché à la prise de vide respective.

Les deux vannes à tiroir 5 et 6 sont logées à l'intérieur du corps 1, plus précisément sur une surface plane, lisse 21, amovible et fixée au corps 1 à l'aide de vis. Les tiges ou arbres 7 et 8 des vannes à tiroir 5 et 6 sont associées à l'aide d'anneaux élastiques, ce qui rend l'ensemble aisément démontable. Ces tiges 7 et 8 pénètrent dans les côtés latéraux du corps 1 qu'elles traversent. Leurs parties extrêmes viennent appuyer sur les membranes élastiques 15 et

8  0234977

16 afin de constituer les moyens d'actionnement pneumatiques, plus précisément intercalés entre le corps 1 et les deux couvercles latéraux 2 qui définissent les deux chambres de chacune des vannes 14,22,23, et 24, comprises dans l'ensemble d'accouplement.

Le fonctionnement général de l'appareil est le suivant :

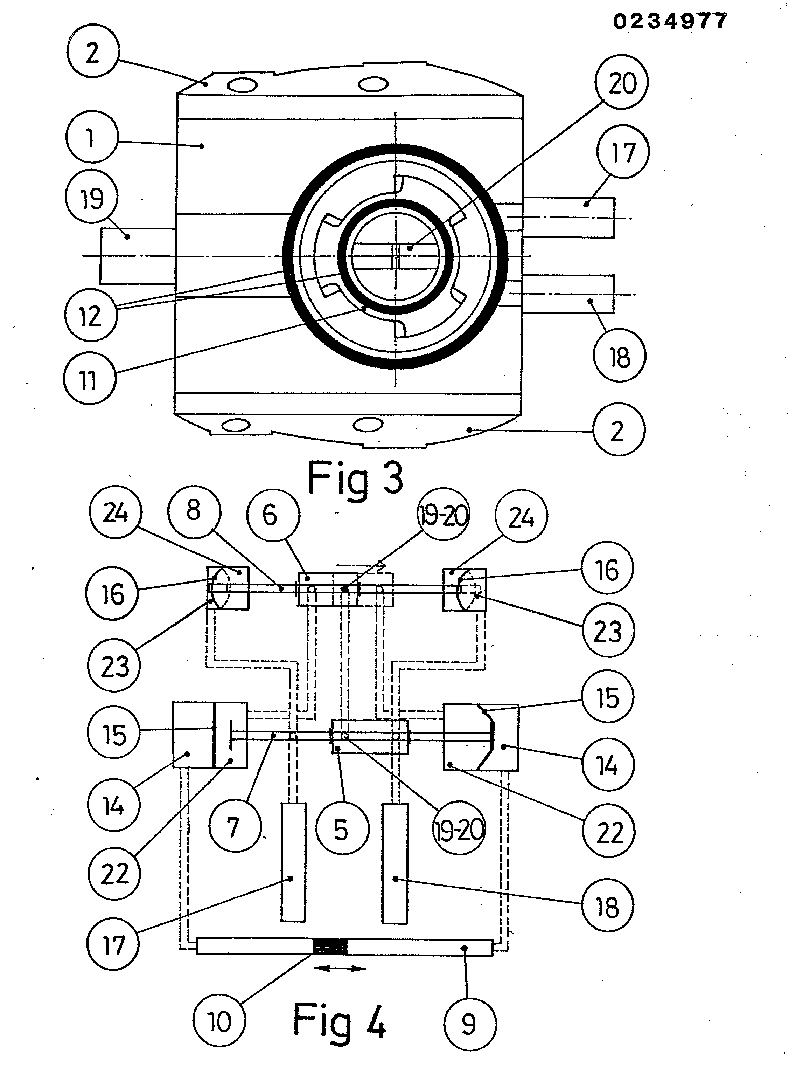

En se rapportant à la position montrée sur la figure 4, le vide fourni par la prise 19 est communiqué du fait de la position occupée par le tiroir principal 5 à la prise 18 attachée à l'une des pis de l'animal, tandis que l'autre prise 17 attachée à un autre pis ne reçoit pas de vide. Le vide ainsi fourni à l'appareil est communiqué à la demi-chambre extérieure 23 correspondante. De la sorte la membrane 16 de cette demi-chambre se déplace en obligeant la tige 8 et le tiroir secondaire 6 à se déplacer également selon la flèche indiquée sur la figure 4 en traits mixtes. Dans la nouvelle position des tiroirs qui en résulte, le vide est envoyé à la demi-chambre intérieure 22. L'arbre 7 se déplace dans cette situation en sens opposé entraînant avec lui le tiroir principal 5. De la sorte dans la nouvelle position qui s'ensuit le vide cesse d'agir par la prise 18 et il agit par la prise 7.

Un tel comportement est déjà connu, par exemple, par le brevet français 2 201 828. On précise donc que la caractéristique essentielle de la présente invention réside dans le mode de communication qui s'établit entre les demi-chambres grandes 14 du côté extérieur de l'appareil.

Suivant l'invention et de manière caractéristique pour ce dispositif, les deux demi-chambres 14 afférentes au tiroir principal 5 sont mises en communication entre elles, ainsi qu'on peut clairement le voir sur les figures 1 et 4, à l'aide d'un tube transparent 9 à l'intérieur duquel est placé un organe qui peut se déplacer à la manière d'un piston 10. Ainsi, lorsque le tiroir principal 5, du fait de l'action du vide dans l'une des demi-chambres intérieures 22, se déplace de l'une vers l'autre position, en réalisant de ce fait le changement, de succion, l'air contenu dans l'une des deux demi-chambres extérieures 14 passe à l'autre sans changement de volume, en se servant du tube 9. Ce passage de l'air provoque également le déplacement de l'organe mobile en forme de piston 10. De la sorte le mouvement de va-et-vient du piston 10 rend clairement visible et par simple perception visuelle, le fonctionnement de l'appareil.

On peut facilement voir le déplacement du piston 10 de l'extérieur de l'appareil, du fait que la culasse 3, ainsi qu'il est clairement rendu visible sur la figure 1, présente une découpe ou fenêtre 4 correspondant à au moins une partie de la totalité de la longueur active du tube transparent 9. En dessous de cette fenêtre, il a été prévu l'existence d'un élément poreux, par exemple en une mousse synthétique ou un matériau similaire, qui représente un siège élastique pour le tube 9. Cet élément poreux sert en même temps de filtre obturateur qui empêche la poussière ou tout autre impureté contenue dans l'air, d'entrer à l'intérieur du mécanisme de l'appareil, ce qui permet éventuellement la suppression de tout filtre, qu'il serait autrement nécessaire de placer devant une telle entrée d'air. (Voir en cela la figure 2.)

Le piston 10, du fait que c'est un organe qui vient s'interposer sur le trajet du vide pour ce qui est de la communication des chambres extérieures 14, constitue en frein ainsi qu'un tampon pour cette communication. Les mouvements du tiroir principal 5 se trouvent de ce fait plus retardés que si l'échappement était libre vers l'extérieur. Cet effet a été utilisé, dans le dispositif suivant l'invention pour résoudre de manière plus simple et parfaitement précise, le réglage du rythme de l'appareil de pulsation. Celui-ci doit s'adapter, ainsi qu'il est bien connu, à chaque espèce d'animal que l'on veut traire. Egalement suivant l'invention, le piston 10 est pourvu d'un orifice calibré approprié ou bien de rainures périphériques également calibrées ou selon une autre forme d'exécution d'un organe calibré intérieur démontable ou encore d'un organe calibré fixe, par exemple à l'une des parties extrêmes du tube 9 ou toute autre solution similaire. On limite de la sorte, dans une proportion voulue, la possibilité de communication offerte à l'air pour y passer et on réalise ainsi à l'aide d'un orifice de section déterminée,un réglage fonctionnement de l'appareil concret et précis.

On a également conçu afin d'offrir une possibilité de faciliter l'identification, le montage et l'emploi de l' appareil de pulsation qui utilise des pistons à passages différemment calibrés correspondant à des animaux de différentes espèces, de pourvoir les divers pistons 10 de signes clairement distinctifs, par exemple de couleurs différentes. Un tel appareil permet donc, après montages et lors de sa mise en service, de savoir sans aucune ambiguité et avec précision, si l'appareil utilisé est précisément celui qui est Iè plus approprié à l'animal soumis à la traite, par exemple en faisant correspondre une certaine couleur pour la traite des vaches, une autre couleur pour les brebis et encore une autre couleur pour les chèvres.

L'appareil de pulsation est également pourvu d'autre part sur son corps 1 et à sa partie inférieure d'une embouchure ou d'un raccord 11 pourvu de rainures pouvant recevoir des joints toriques 12 et 13, et qui permet au dispositif d'être installé sans problèmes et de fonctionner branché à des conduits de vide de différentes séctions, ainsi qu'elles se trouvent déjà prévues dans l'exploitation qui comporte le dispositif de traite. On a également prévu de pouvoir fermer cette embouchure par un bouchon lorsque l'appareil n'est pas utilisé. On peut même utiliser dans ce cas la prise latérale 19 pour raccorder l'appareil à l'installation de vide. Cet appareil de pulsation est, de cette manière utilisable pratiquement en étant branché à n'importe quel type d'installation de vide dont l'exploitation dispose.

REVENDICATIONS

1.- Appareil de pulsation pour la traite des animaux laitiers destiné à assurer, lors de la traite, une succion alternative des pis de l'animal, comprenant un ensemble de deux vannes à trois voies du type à tiroir mu par des moyens d'actionnement situés aux parties extrêmes de leur axe de mouvement, constitués pour chaque tiroir par une chambre située à chacune des parties extrêmes d'une tige axiale qui les réunit , chacune de ces chambres étant divisée, dans le sens de l'axe de cette tige, par une membrane élastique transversale, en deux demi-chambres dont l'une est située vers l'extérieur et l'autre vers l'intérieur de l'appareil, caractérisé en ce que les deux demi-chambres extérieures (14) des moyens d'actionnement du tiroir principal (5) sont reliées par un organe tubulaire (9) transparent monté en place, qui renferme à l'intérieur un organe mobile tel qu'un piston (10), de sorte que le déplacement du tiroir et le déplacement de l'air qui s'ensuit de l'une vers l'autre des deux demi-chambres (14) du même tiroir est rendu clairement visible par le déplacement de ce piston (10), qui porte également un orifice calibré qui permet de régler le flux d'air déplacé.

2.- Appareil de pulsation pour la traite des animaux laitiers suivant la revendication 1 caractérisé en ce que le piston (10) est associé à des moyens calibrés de passage de l'air, qui lui confèrent une fréquence de fonctionnement préétablie, signalée par une caractéristique optique clairement visible telle qu'une couleur de différenciation, qui permet d'associer immédiatement l'appareil de pulsation utilisé avec un certain rythme prédéterminé de traite, correspondant au rythme nécessaire pour la traite d'une certaine race d'animal à traire.

3.- Appareil de pulsation pour la traite des animaux laitiers suivant l'une quelconque des revendications précédentes caractérisé en ce que les moyens calibrés de passage de l'air à travers l'orgage tubulaire (9) transparent dans lequel se trouve monté le piston (10), sont associés avec ce piston (10), à l'intérieur ou à l'extérieur de ce piston (10), comme organe faisant partie de celui-ci ou qui lui est associé ou bien associé à des organes d'extrémité placés dans une position fixe aux parties extrêmes de cet organe tubulaire (9) transparent.

4.- Appareil de pulsation pour la traite des animaux laitiers suivant l'une quelconque des revendications précédentes caractérisé en ce qu'il comporte une culasse (3) comprenant une fenêtre (4) dont les dimensions correspondent à la position et aux dimensions de l'organe tubulaire (9) et qui permet, lorsque l'appareil de pulsation est en service, une vision claire du piston (10) mobile et une vérification du bon fonctionnement de l'appareil.

Fig 1

0234977

Fig 2

0234977

Fig 3

Fig 4

**RAPPORT DE RECHERCHE EUROPEENNE**

Office européen
des brevets

Numéro de la demande **0234977**

EP 87 40 0102

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 201 828 (L. LIGABUE) | | A 01 J 25/12 |
| | --- | | |
| D,A | EP-A-0 009 282 (INTERPULS S.N.C. DI LIGABUE & CO.) | | |
| | --- | | |
| A | US-A-2 772 689 (T. ASTI) | | |
| | --- | | |
| A | CH-A- 551 738 (R. STAUB) | | |
| | --- | | |
| A | DE-U-7 922 032 (F. HAPPEL) | | |
| | ----- | | |

**DOMAINES TECHNIQUES RECHERCHES (Int. Cl.4)**

A 01 J

Le présent rapport de recherche a été établi pour toutes les revendications

| Lieu de la recherche | Date d'achèvement de la recherche | Examinateur |
|---|---|---|
| LA HAYE | 18-03-1987 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82